# FASCICULE DE BREVET EUROPEEN

(11) **EP 2 767 751 B1**
(45) Date de publication et mention de la délivrance du brevet: **01.05.2019**
(21) Numéro de dépôt: 14154069.0
(22) Date de dépôt: 06.02.2014
(51) Int. Cl.: F21S 41/16, F21S 41/675, F21S 45/70, F21S 41/37, F21S 41/173, B60Q 11/00, G02B 26/10

(54) **Système d'éclairage adaptatif sécurisé**
Gesichertes adaptives Beleuchtungssystem
Secure adaptive lighting system

(30) Priorité: 14.02.2013 FR 1351283
(43) Date de publication de la demande: 20.08.2014
(73) Titulaire: VALEO VISION, 93012 Bobigny Cedex (FR)
(72) Inventeur: Albou, Pierre, 75013 PARIS (FR); Puente, Jean-Claude, 93190 LIVRY GARGAN (FR)

(56) Documents cités:
- EP-A1- 1 589 383
- DE-A1-102007 025 330
- DE-A1-102010 028 949
- DE-A1-102010 048 659
- US-A1- 2003 021 497
- US-A1- 2006 291 027

## Description

La présente invention concerne le domaine technique des systèmes d'éclairage pour véhicule automobile. Plus précisément, l'invention porte sur un dispositif de sécurité d'un système d'éclairage muni d'une source laser.

On connaît déjà du document EP 2 063 170 un système d'éclairage pour véhicule automobile, muni d'une source laser dont le rayonnement lumineux est réparti spatialement, au moyen d'un système de balayage, sur la surface d'un dispositif de conversion de longueur d'ondes qui comprend un substrat en matériau transparent sur lequel est déposée une couche mince de matériau phosphorescent.

On notera que l'homme du métier entend par « matériau phosphorescent » un matériau composé de différents éléments chimiques ne contenant pas nécessairement de phosphore.

Le rayonnement lumineux traverse le dispositif de conversion de longueur d'ondes lequel réémet un rayonnement de lumière blanche.

Ce système d'éclairage comporte en outre un système optique d'imagerie recevant la lumière blanche réémise par le dispositif de conversion de longueur d'onde et projetant cette lumière en avant du véhicule pour former un faisceau d'éclairage. Dans un tel système, le dispositif de conversion de longueur d'onde est situé au voisinage d'un plan focal du système optique d'imagerie.

Un tel système d'éclairage présente dans certains cas deux inconvénients qui sont liés à l'efficacité et à la sécurité d'un tel système.

En effet, l'efficacité du système est limitée par les phénomènes d'absorption du rayonnement par le substrat en matériau transparent et les réflexions parasites du rayonnement traversant les dioptres du dispositif de conversion. En fait, une partie du rayonnement est réfléchie vers la source de rayonnement et approximativement la moitié de la lumière blanche est réémise vers l'arrière du dispositif de conversion de longueur d'onde, c'est à dire à l'opposé du système optique d'imagerie. De plus, le substrat en matériau transparent est généralement en polycarbonate ou en verre. Ces matériaux sont connus pour être de mauvais conducteurs thermiques. Or la puissance du rayonnement laser à tendance à échauffer le matériau phosphorescent de manière importante sans possibilité de dissipation de cette chaleur dans le verre ou le polycarbonate. Il résulte de cet échauffement une baisse du rendement de conversion du rayonnement laser en lumière blanche.

Le fait d'utiliser le matériau phosphorescent en transmission, c'est-à-dire en les éclairant par un rayonnement laser d'un côté et en recueillant la lumière émise de l'autre côté implique que l'épaisseur de la couche de matériau phosphorescent soit faible. Il en résulte que l'on risque dans certains cas une dégradation de la couche de matériau phosphorescent créant une zone nue dans laquelle le matériau phosphorescent a disparu si bien qu'une partie du rayonnement laser traverse directement la zone nue et est projetée en avant du véhicule. Selon la puissance et la longueur d'onde d'émission de la source laser, celle-ci peut représenter un réel danger par exemple pour les yeux d'un piéton placé dans la scène de route.

De plus, dans le cas d'une détérioration du système de balayage, par exemple lors d'un accident de la route, il est possible que le laser reste figé vers un seul point du dispositif de conversion de longueur d'onde, ce dernier transmettant un rayon lumineux de très haute luminance à l'extérieur du véhicule. Un tel rayon pourrait brûler la peau ou les yeux d'un piéton ou d'un automobiliste.

Ces différents risques incitent à n'utiliser que des sources lasers de puissance modérée et notamment à renoncer aux sources laser très puissantes, ce qui limite l'efficacité du système d'éclairage.

On connaît également de DE 10 2010 028 949 A1 un système d'éclairage pour véhicule automobile utilisant une source laser, une système de balayage à miroir mobile, un réflecteur fixe recouvert d'un matériau phosphorescent et une lentille de projection. Ce document décrit implicitement des moyens de détection d'un système de balayage.

L'invention a pour but de proposer un système d'éclairage plus efficace en minimisant les dispersions du rayonnement du laser et/ou permettant l'utilisation d'une source laser très puissante.

A cet effet, l'invention a pour objet un système d'éclairage pour véhicule automobile comportant :
- au moins une source lumineuse primaire émettant un rayonnement lumineux,
- un système de balayage recevant le rayonnement lumineux de la source lumineuse primaire et le répartissant spatialement sur un dispositif de conversion de longueur d'onde, de façon à balayer sur ce dispositif de conversion une surface de balayage,
- le dispositif de conversion de longueur d'onde recevant le rayonnement lumineux de la source primaire et réémettant un rayonnement de lumière blanche,
- un système optique d'imagerie recevant la lumière blanche réémise par le dispositif de conversion de longueur d'onde et projetant cette lumière en avant du véhicule pour former un faisceau d'éclairage, le dispositif de conversion de longueur d'onde étant situé au voisinage d'un plan focal du système optique d'imagerie.

Selon l'invention, le dispositif de conversion de longueur d'onde comprend un substrat formant miroir, le système de balayage et le système optique d'imagerie étant disposés du même côté réfléchissant du miroir, le système d'éclairage comprenant de plus des moyens de réflexion du rayonnement lumineux vers des moyens de détection d'un défaut de balayage, ces moyens de réflexion étant agencés sur un bord de la surface de balayage et les moyens de détection étant compris dans le système d'éclairage.

Ainsi, un tel système d'éclairage permet d'utiliser des sources lumineuses très puissantes en minimisant les dispersions du rayonnement du laser. En effet, du fait que l'on utilise un dispositif de conversion de longueur d'onde muni d'un miroir et que l'on place le système de balayage et le système optique d'imagerie du même côté réfléchissant du miroir, le rayonnement émis par la source lumineuse ne traverse plus le substrat transparent et surtout, la lumière émise par le dispositif de conversion de longueur d'onde est renvoyée vers le système optique d'imagerie. Les pertes de rayonnement sont ainsi considérablement diminuées. Par ailleurs, ce système permet lors d'une défaillance du dispositif de balayage de supprimer les risques d'émission accidentelle du rayonnement laser vers la scène de route. En effet, dans le cas d'une destruction partielle du dispositif de conversion de longueur d'onde, le rayonnement qui est dirigé vers l'arrière du véhicule en direction du miroir du substrat, ne risque pas d'atteindre un passant se trouvant dans la scène de route. Ces risques étant évités, on peut utiliser un laser relativement puissant. De plus, lors d'une défaillance du système de balayage, les moyens de détection d'un défaut de balayage transmettent à des moyens classiques de contrôle du bon fonctionnement du système de balayage une information caractérisant le fait que les moyens de réflexion du rayonnement lumineux ne sont plus balayés de manière normale. En conséquence, les moyens de contrôle envoient automatiquement une instruction d'arrêt de l'alimentation de la source laser afin de prévenir tout risque éventuel pour des personnes se trouvant à proximité du véhicule.

Un système d'éclairage selon l'invention peut en outre comporter l'une ou plusieurs des caractéristiques optionnelles suivantes :
- la surface de balayage est formée au moins en partie par la surface d'une couche de matériau phosphorescent recouvrant le substrat ;
- les moyens de réflexion du rayonnement lumineux sont venus de matière avec le dispositif de conversion de longueur d'onde ;
- les moyens de réflexion du rayonnement lumineux sont des miroirs rapportés sur le dispositif de conversion de longueur d'onde ;
- la surface de balayage a un contour sensiblement polygonal ;
- les moyens de réflexion sont positionnés uniquement aux emplacements des angles du contour sensiblement polygonal ;
- les moyens de réflexion sont positionnés uniquement sur deux côtés adjacents du contour sensiblement polygonal ;
- les moyens de réflexion sont régulièrement répartis sur la surface de balayage ;
- le système comprend au moins une paroi d'absorption des rayonnements émis par le dispositif de conversion de longueur d'ondes s'écartant du trajet vers le système optique d'imagerie.

L'invention sera mieux comprise à la lecture de la description qui va suivre, donnée uniquement à titre d'exemple et faite en se référant aux dessins annexés dans lesquels :
- la figure 1 est une vue schématique d'un système d'éclairage selon l'invention ;
- la figure 2 est une vue schématique d'un premier mode de réalisation des moyens de réflexion du rayonnement lumineux vers les moyens de détection du défaut de balayage, ces moyens de réflexion équipant le système d'éclairage de la figure 1 ;
- la figure 3 est une vue similaire à la figure 2 d'un deuxième mode de réalisation des moyens de réflexion.

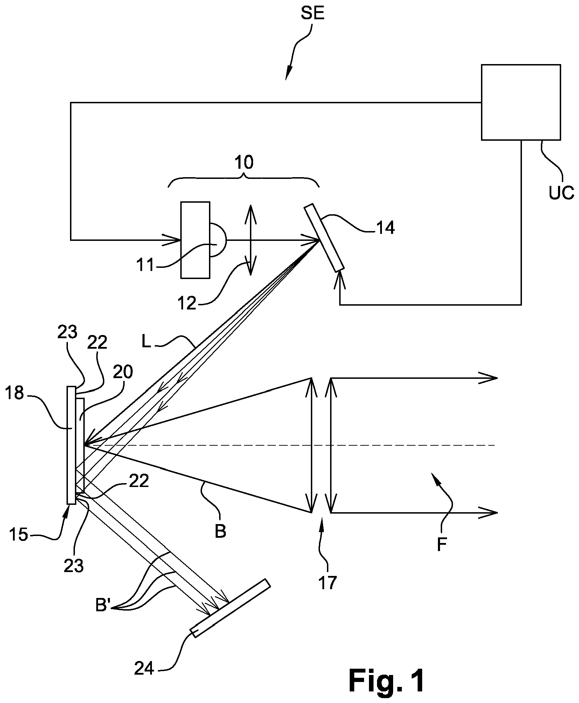

En référence à la figure 1, on voit un schéma d'un système d'éclairage SE selon la présente invention. Un tel système comporte une source 10 de rayonnement lumineux comprenant une source lumineuse primaire 11 de type classique, des moyens optiques classiques de focalisation 12 et un système de balayage 14.

La source lumineuse 11 est une source laser comprenant par exemple une diode laser, émettant par exemple un rayonnement laser L dont la longueur d'onde est comprise entre 400 nanomètres et 500 nanomètres, et de préférence voisine de 450 ou 460 nanomètres. Ces longueurs d'onde correspondent à des couleurs allant du bleu au proche ultraviolet.

La source lumineuse primaire 11 peut en variante comprendre un dispositif optique combinant en un seul faisceau plusieurs rayonnements lasers, par exemple à l'aide de fibres optiques ou de dispositifs tirant profit des polarisations différentes de différentes sources laser.

Le système de balayage 14, de type classique, comprend dans l'exemple décrit un micro-miroir unique, mobile autour de deux axes orthogonaux, tel que ceux qui sont utilisés dans les systèmes de balayage optique appelés « scanners ».

Le micro-miroir réfléchit le rayonnement lumineux vers un dispositif 15 de conversion de longueur d'onde qui transmet le rayonnement vers un système optique classique d'imagerie 17.

Le dispositif 15 de conversion de longueur d'onde comprend un substrat 18 formant miroir qui est recouvert d'une couche 20 continue et homogène d'un matériau phosphorescent. Le système de balayage 14 et le système optique d'imagerie 17 sont disposés du même côté réfléchissant du miroir 18 formé par le substrat.

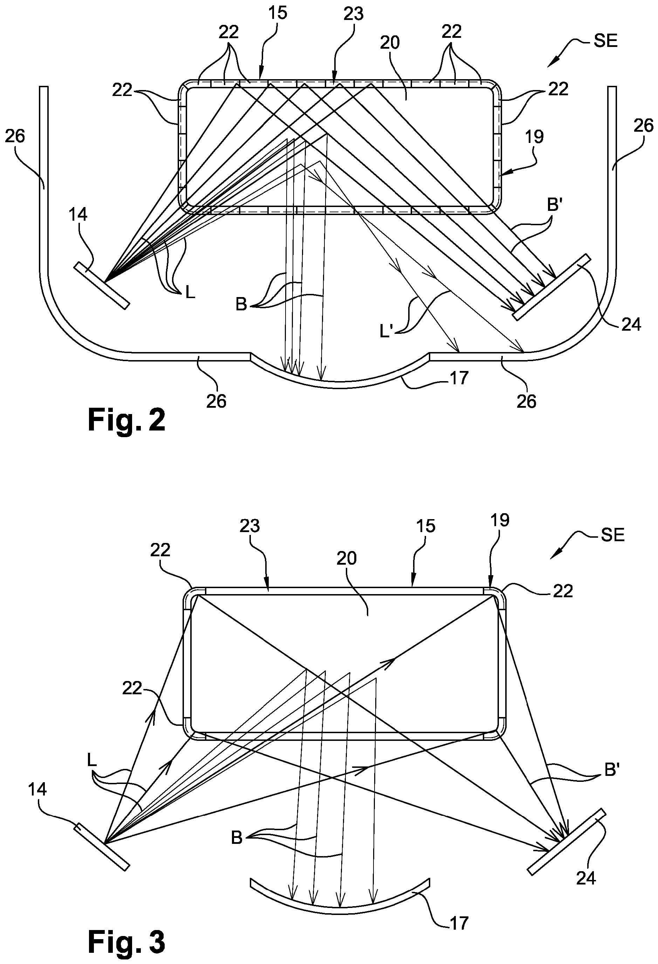

La source 11 génère un rayon laser L qui est dévié selon deux directions par le système de balayage 14, et il en émerge dans un angle solide interceptant une surface de balayage 19 du dispositif 15 de conversion de longueur d'onde (voir figure 2).

De façon connue, chaque point de la couche 20 du dispositif 15 de conversion de longueur d'onde recevant le rayonnement laser L, par essence monochromatique et cohérent, réémet, vers le système d'imagerie 17, une lumière B de longueur d'onde différente, et notamment une lumière qui peut être considérée comme « blanche », c'est-à-dire qui comporte une pluralité de longueurs d'onde entre environ 400 nanomètres et 800 nanomètres, c'est-à-dire comprises dans le spectre de la lumière visible. Cette émission de lumière se produit, selon un diagramme d'émission lambertienne, c'est-à-dire avec une luminance uniforme dans toutes les directions.

La couche 20 de matériau phosphorescent étant déposée sur le substrat 18 réfléchissant pour le rayonnement laser L, on est assuré que le rayonnement laser L qui n'aurait pas rencontré de grain de matériau phosphorescent 20 avant d'avoir traversé complètement la couche 20 de matériau phosphorescent, pourra rencontrer un grain de matériau phosphorescent après avoir été réfléchi par le substrat 18.

Le substrat 18 est choisi dans les matériaux bons conducteurs thermiquement, comme l'aluminium par exemple. Le substrat 18 permet ainsi de limiter la température de la couche 20 de matériau phosphorescent en favorisant la dissipation de chaleur par le substrat 18.

La surface de balayage 19 est formée au moins en partie par la surface de la couche 20 de matériau phosphorescent recouvrant le substrat 18. Cette couche 20 est continue et homogène car sinon la partition de la couche 20 de matériau phosphorescent en éléments distincts ne permet pas d'obtenir la précision souhaitée dans la réémission de lumière blanche, particulièrement au niveau des points situés à la limite entre deux de ces éléments distincts.

La couche 20 de matériau phosphorescent est située au voisinage immédiat du plan focal du système optique 17 d'imagerie, qui forme alors à l'infini une image de la couche 20 de matériau phosphorescent, ou plus exactement des points de cette couche qui émettent de la lumière blanche en réponse à l'excitation laser qu'ils reçoivent. En d'autres termes, le système optique d'imagerie 17 forme un faisceau lumineux F avec la lumière B émise par les différents points de la couche 20 de matériau phosphorescent illuminés par le rayonnement laser L.

Le faisceau lumineux F émergeant du système d'imagerie 17 est ainsi directement fonction des rayons lumineux B émis par la couche 20 de matériau phosphorescent, eux-mêmes fonction directement du rayonnement laser L qui balaye cette couche 20.

Une unité de commande UC pilote les différents composants de la source 10 de rayonnement lumineux en fonction de la photométrie désirée du faisceau lumineux F. En particulier, l'unité UC pilote simultanément le système de balayage 14, pour que le rayon laser L balaye successivement tous les points de la couche 20 de matériau phosphorescent, et la source laser 11 pour moduler l'intensité du rayon laser L.

Il est ainsi possible d'éclairer la couche 20 de matériau phosphorescent avec le rayonnement laser L de manière à former sur cette couche 20 une image, cette image étant formée d'une succession de lignes formées chacune d'une succession de points plus ou moins lumineux, de la même manière qu'une image sur un écran de télévision à tube cathodique.

De préférence, le système d'éclairage SE est adaptatif et il comporte à cet effet des moyens classiques pour moduler l'intensité de l'éclairage de façon continue, l'intensité croissant ou décroissant continûment entre une valeur minimale et une valeur maximale. On peut également moduler l'intensité de l'éclairage de façon discrète, l'intensité variant par sauts d'une valeur à une autre, entre une valeur minimale et une valeur maximale. Dans les deux cas, on peut prévoir que la valeur minimale nulle correspond à une absence de lumière.

Chaque point de la couche de matériau phosphorescent 20 ainsi éclairé par le rayonnement laser L émet de la lumière blanche B, avec une intensité qui est directement fonction de l'intensité du rayonnement laser L qui éclaire ce point, l'émission s'effectuant selon un diagramme d'émission lambertienne.

La couche 20 de matériau phosphorescent peut alors être considérée comme une source de rayonnement secondaire, constituée d'une image lumineuse, dont le système optique d'imagerie 17 forme une image à l'infini, par exemple sur un écran placé à distance dans l'axe du système optique 17 et perpendiculairement à cet axe. L'image sur un tel écran est la matérialisation du faisceau lumineux F émis par le système optique 17.

En référence à la figure 2, on voit que le dispositif de conversion de longueur d'onde a une forme sensiblement rectangulaire et comporte des moyens de réflexion 22, selon un premier mode de réalisation, qui sont régulièrement répartis sur un bord de la surface de balayage 19.

Dans ce mode de réalisation, les moyens de réflexion 22 sont venus de matière avec le dispositif 15 de conversion de longueur d'onde. Plus particulièrement, la couche 20 de matériau phosphorescent recouvre partiellement une surface réfléchissante du substrat 18 de façon que la couche 20 est entourée par une zone périphérique nue 23 de surface réfléchissante qui forme les moyens de réflexion 22.

Le système 14 balaye un rayonnement lumineux L sur la surface de balayage 19 qui est formée au moins en partie par la couche 20 de matériau phosphorescent et la zone périphérique nue 23 de la surface réfléchissante 19.

Les moyens de réflexions 22 sont orientés pour réfléchir le rayonnement qu'ils reçoivent vers des moyens de détection 24 d'un défaut de balayage.

Lorsque le rayonnement L est émis sur les moyens de réflexion 22 qui sont répartis sur les bords de la surface de balayage 19, un rayonnement B' est renvoyé vers les moyens de détection 24 de défauts de balayage.

Ces moyens de détection 24 comprennent notamment des capteurs 24 de lumière reliés à des moyens classiques de contrôle du bon fonctionnement du système de balayage. Les moyens de contrôle détectent par exemple les absences anormales de réception d'un rayonnement B' par les capteurs 24 par rapport à une fréquence de balayage normale sur la surface 19. En cas d'absence anormale de rayonnement B', les moyens de contrôle pilotent l'arrêt de l'alimentation de la source lumineuse 11.

De préférence, comme illustré également sur la figure 2, le système d'éclairage SE comprend des parois d'absorption 26 des rayonnements émis par le dispositif de conversion de longueur d'onde s'écartant du trajet normal vers le système optique d'imagerie 17. On a représenté de tels rayons L' qui s'écartent du système optique et qui sont absorbés par une des parois d'absorption 26. De telles parois sont très utiles lorsque la couche de matériau phosphorescent 20 est endommagée, car le substrat réfléchissant 18 renvoie directement un rayonnement laser L qui n'a pas été encore converti en lumière blanche B et qui est donc potentiellement dangereux.

Sur la figure 3, on a représenté des moyens de réflexion 22 selon un deuxième mode de réalisation. Sur cette figure 3, les éléments analogues à ceux des figures 1 et 2 sont désignés par des références identiques.

Dans ce second mode de réalisation, les moyens de réflexion 22 sont positionnés uniquement aux emplacements des angles du contour sensiblement rectangulaire du dispositif 15 de conversion de longueur d'onde.

Dans un autre mode de réalisation non représenté, le dispositif 15 de conversion de longueur d'onde du système optique comporte des moyens de réflexion 22 positionnés uniquement sur deux côtés adjacents du contour sensiblement rectangulaire.

L'invention n'est pas limitée aux modes de réalisation présentés. En particulier, il est notamment possible que le contour du dispositif 15 de conversion de longueur d'ondes ait une forme différente, par exemple une forme sensiblement polygonale autre que rectangulaire. Également, les moyens de réflexion 22 peuvent être formés par des miroirs rapportés sur les bords du dispositif 15 de conversion de longueur d'onde.

## Revendications

1. Système d'éclairage (SE) pour véhicule automobile comportant :
- au moins une source lumineuse (11) primaire émettant un rayonnement lumineux (L),
- un système de balayage (14) recevant le rayonnement lumineux (L) de la source lumineuse (11) primaire et le répartissant spatialement sur un dispositif (15) de conversion de longueur d'onde, de façon à balayer sur ce dispositif de conversion une surface de balayage (19),
- le dispositif (15) de conversion de longueur d'onde recevant le rayonnement lumineux (L) de la source primaire et réémettant un rayonnement de lumière blanche (B),
- un système (17) optique d'imagerie recevant la lumière blanche (B) réémise par le dispositif (15) de conversion de longueur d'onde et projetant cette lumière (B) en avant du véhicule pour former un faisceau d'éclairage, le dispositif (15) de conversion de longueur d'onde étant situé au voisinage d'un plan focal du système (17) optique d'imagerie,
- des moyens de détection (24) d'un défaut de balayage, le dispositif (15) de conversion de longueur d'onde comprenant un substrat (18) formant miroir (18), le système de balayage (14) et le système optique (17) d'imagerie étant disposés du même côté réfléchissant du miroir (18), le système d'éclairage (SE) étant **caractérisé en ce qu'**il comprend de plus des moyens de réflexion (22) du rayonnement lumineux (L) vers les moyens de détection (24) d'un défaut de balayage, ces moyens de réflexion (22) étant agencés sur un bord de la surface de balayage (19).

2. Système selon la revendication précédente, **caractérisé en ce que** la surface de balayage (19) est formée au moins en partie par la surface d'une couche (20) de matériau phosphorescent recouvrant le substrat (18).

3. Système selon la revendication 1 ou 2, dans lequel les moyens de réflexion (22) du rayonnement lumineux (L) sont venus de matière avec le dispositif (15) de conversion de longueur d'onde.

4. Système selon la revendication 1 ou 2, dans lequel les moyens (22) de réflexion du rayonnement lumineux sont des miroirs rapportés sur le dispositif (15) de conversion de longueur d'onde.

5. Système selon l'une quelconque des revendications précédentes, dans lequel la surface (19) de balayage a un contour sensiblement polygonal.

6. Système selon la revendication 5, dans lequel les moyens de réflexion (22) sont positionnés uniquement aux emplacements des angles du contour sensiblement polygonal.

7. Système selon la revendication 5 ou 6, dans lequel les moyens de réflexion (22) sont positionnés uniquement sur deux côtés adjacents du contour sensiblement polygonal.

8. Système selon l'une quelconque des revendications précédentes, dans lequel les moyens de réflexion (22) sont régulièrement répartis sur la surface (19) de balayage.

9. Système selon l'une quelconque des revendications précédentes, comprenant au moins une paroi (26) d'absorption des rayonnements (L') émis par le dispositif (15) de conversion de longueur d'ondes s'écartant du trajet vers le système (17) optique d'imagerie.

## Patentansprüche

1. Beleuchtungssystem (SE) für ein Kraftfahrzeug, umfassend:
- wenigstens eine primäre Lichtquelle (11), die eine Lichtstrahlung (L) aussendet,
- ein Abtastsystem (14), das die Lichtstrahlung (L) der primären Lichtquelle (11) empfängt und sie auf eine Vorrichtung (15) zur Wellenlängenumwandlung räumlich so verteilt, dass auf dieser Umwandlungsvorrichtung eine Abtastfläche (19) abgetastet wird,
- wobei die Vorrichtung (15) zur Wellenlängenumwandlung die Lichtstrahlung (L) der primären Quelle empfängt und eine weiße Lichtstrahlung (B) remittiert,
- ein optisches Bilderzeugungssystem (17), welches das von der Vorrichtung (15) zur Wellenlängenumwandlung remittierte weiße Licht (B) empfängt und dieses Licht (B) vor das Fahrzeug projiziert, um ein Beleuchtungsbündel zu formen, wobei sich die Vorrichtung (15) zur Wellenlängenumwandlung in der Nähe einer Brennebene des optischen Bilderzeugungssystems (17) befindet,
- Mittel zur Erkennung (24) eines Abtastfehlers, wobei die Vorrichtung (15) zur Wellenlängenumwandlung ein Substrat (18) umfasst, das einen Spiegel (18) bildet, wobei das Abtastsystem (14) und das optische Bilderzeugungssystem (17) auf derselben reflektierenden Seite des Spiegels (18) angeordnet sind,
wobei das Beleuchtungssystem (SE) **dadurch gekennzeichnet ist, dass** es außerdem Mittel zur Reflexion (22) der Lichtstrahlung (L) in Richtung der Mittel zur Erkennung (24) eines Abtastfehlers umfasst, wobei diese Reflexionsmittel (22) auf einem Rand der Abtastfläche (19) angeordnet sind.

2. System nach dem vorhergehenden Anspruch, **dadurch gekennzeichnet, dass** die Abtastfläche (19) wenigstens teilweise von der Oberfläche einer Schicht (20) aus phosphoreszierendem Material gebildet wird, die das Substrat (18) bedeckt.

3. System nach Anspruch 1 oder 2, wobei die Mittel zur Reflexion (22) der Lichtstrahlung (L) stoffschlüssig mit der Vorrichtung (15) zur Wellenlängenumwandlung verbunden sind.

4. System nach Anspruch 1 oder 2, wobei die Mittel zur Reflexion (22) der Lichtstrahlung Spiegel sind, die an der Vorrichtung (15) zur Wellenlängenumwandlung angebracht sind.

5. System nach einem der vorhergehenden Ansprüche, wobei die Abtastfläche (19) eine im Wesentlichen polygonale Kontur aufweist.

6. System nach Anspruch 5, wobei die Reflexionsmittel (22) ausschließlich an den Stellen der Winkel der im Wesentlichen polygonalen Kontur positioniert sind.

7. System nach Anspruch 5 oder 6, wobei die Reflexionsmittel (22) ausschließlich an zwei benachbarten Seiten der im Wesentlichen polygonalen Kontur positioniert sind.

8. System nach einem der vorhergehenden Ansprüche, wobei die Reflexionsmittel (22) gleichmäßig auf der Abtastfläche (19) verteilt sind.

9. System nach einem der vorhergehenden Ansprüche, welches wenigstens eine Wand (26) zur Absorption der von der Vorrichtung (15) zur Wellenlängenumwandlung ausgesendeten Strahlung (L'), die von dem in Richtung des optischen Bilderzeugungssystems (17) verlaufenden Weg abweicht, umfasst.

## Claims

1. Lighting system (SE) for a motor vehicle comprising:
- at least one primary light source (11) emitting a light radiation (L),
- a scanning system (14) receiving the light radiation (L) from the primary light source (11) and distributing it spatially on a wavelength conversion device (15), so as to sweep, on this conversion device, a scanning surface (19),
- the wavelength conversion device (15) receiving the light radiation (L) from the primary source and re-emitting a white light radiation (B),
- an optical imaging system (17) receiving the white light (B) re-emitted by the wavelength conversion device (15) and projecting this light (B) in front of the vehicle to form a lighting beam, the wavelength conversion device (15) being situated in the vicinity of a focal plane of the optical imaging system (17),
- means (24) for detecting a scanning fault, the wavelength conversion device (15) comprising a substrate (18) forming a mirror (18), the scanning system (14) and the optical imaging system (17) being arranged on the same reflecting side of the mirror (18), the lighting system (SE) being **characterized in that** it additionally comprises means (22) for reflecting the light radiation (L) towards the means (24) for detecting a scanning fault, these reflection means (22) being arranged on an edge of the scanning surface (19).

2. System according to the preceding claim, **characterized in that** the scanning surface (19) is formed at least partly by the surface of a layer (20) of phosphorescent material covering the substrate (18).

3. System according to Claim 1 or 2, in which the means (22) for reflecting the light radiation (L) are made of the same material as the wavelength conversion device (15).

4. System according to Claim 1 or 2, in which the means (22) for reflecting the light radiation are mirrors attached to the wavelength conversion device (15).

5. System according to any one of the preceding claims, in which the scanning surface (19) has a substantially polygonal outline.

6. System according to Claim 5, in which the reflection means (22) are positioned only at the positions of the corners of the substantially polygonal outline.

7. System according to Claim 5 or 6, in which the reflection means (22) are positioned only on two adjacent sides of the substantially polygonal outline.

8. System according to any one of the preceding claims, in which the reflection means (22) are evenly distributed on the scanning surface (19).

9. System according to any one of the preceding claims, comprising at least one wall (26) for absorbing radiations (L') emitted by the wavelength conversion device (15) moving away from the path towards the optical imaging system (17).
